# EUROPEAN PATENT SPECIFICATION

(11) **EP 2 751 891 B1**
(45) Date of publication and mention of the grant of the patent: **27.10.2021**
(21) Application number: 12769040.2
(22) Date of filing: 02.09.2012
(51) Int. Cl.: H02G 5/06

(54) **INSULATOR FOR HIGH-VOLTAGE GAS INSULATED SWITCH GEAR**
ISOLATOR FÜR GASISOLIERTE HOCHPSANNUNGSSCHALTANLAGE
ISOLATEUR POUR APPAREILLAGE HT À ISOLATION GAZEUSE

(30) Priority: 02.09.2011 US 201161530668 P
(43) Date of publication of application: 09.07.2014
(73) Proprietor: ABB Power Grids Switzerland AG, 5400 Baden (CH)
(72) Inventor: ZANT, Nikolaus, CH-8048 Zürich (CH); BEDNAROWSKI, Dariusz, PL-31-952 Krakow (PL); PLATEK, Robert, PL-30-719 Krakow (PL); MARTINI, Harald, S-722 18 Västerås (SE); UHL, Ralph, 60316 Frankfurt (DE); MANN, Michael, 63743 Aschaffenburg (DE); GHOUL, Cherif, F-68200 Mulhouse (FR); MALINOWSKI, Lukasz, PL-30-504 Krakow (PL)
(74) Representative: Michalski Hüttermann & Partner Patentanwälte mbB
(86) International application number: PCT/EP2012/067041
(87) International publication number: WO 2013/030387

(56) References cited:
- EP-A1- 2 083 426
- EP-A2- 0 660 480
- EP-A2- 0 938 115
- EP-A2- 1 294 064
- WO-A1-2008/031872
- CN-U- 201 707 981
- JP-A- 2004 104 897
- JP-A- 2010 161 065
- JP-A- 2010 176 969
- JP-U- S5 985 526
- US-A- 4 122 298
- US-A- 4 415 762

## Description

### FIELD OF THE INVENTION

Aspects of the invention relate to an insulator for a gas insulated device, in particular to an insulator comprising an insulator disc surrounding a high voltage conductor. Further aspects relate to a gas insulated device comprising such an insulator. Further aspects relate to methods of producing such an insulator.

### BACKGROUND OF THE INVENTION

A gas-insulated switchgear (GIS) accommodates high-voltage conductors such as lead conductors to which a high voltage is applied. In order to shield and insulate the high-voltage conductor from other components and from the outside, such an apparatus comprises a grounded metal enclosure filled with an insulating gas, generally a dielectric gas such as SF6.

In order to hold a high-voltage conductor firmly inside the device volume, in a position sufficiently far away from the grounded enclosure such as to avoid dielectric breakdowns, an insulator is provided inside the GIS enclosure. The insulator is secured at its outer edge to the enclosure, and has a central opening for accommodating the high-voltage conductor. The main portion of the spacer is an insulator disc, with the opening at its center. Some spacers may have a metal armature ring attached to the outer circumference of the insulator disc. The armature ring may have attachment means such as thread holes, which allow the insulator disc to be firmly attached to the GIS enclosure.

For a long time for the manufacturing of insulators in GIS alumina filled epoxy has been used as basic material. Epoxy is a material which has good electrical insulating properties and mechanical strength but has also disadvantages. Epoxy is not environment friendly and the manufacturing process (moulding) is complicated, time consuming, and therefore also relatively costly. An additional disadvantage of the epoxy insulators is the material inherit brittleness. This brittleness may lead to an unwanted sudden failure if loaded too high and therefore needs to be controlled closely to ensure proper part function. The manufacturing process is complex but a stable production critical for good part quality.

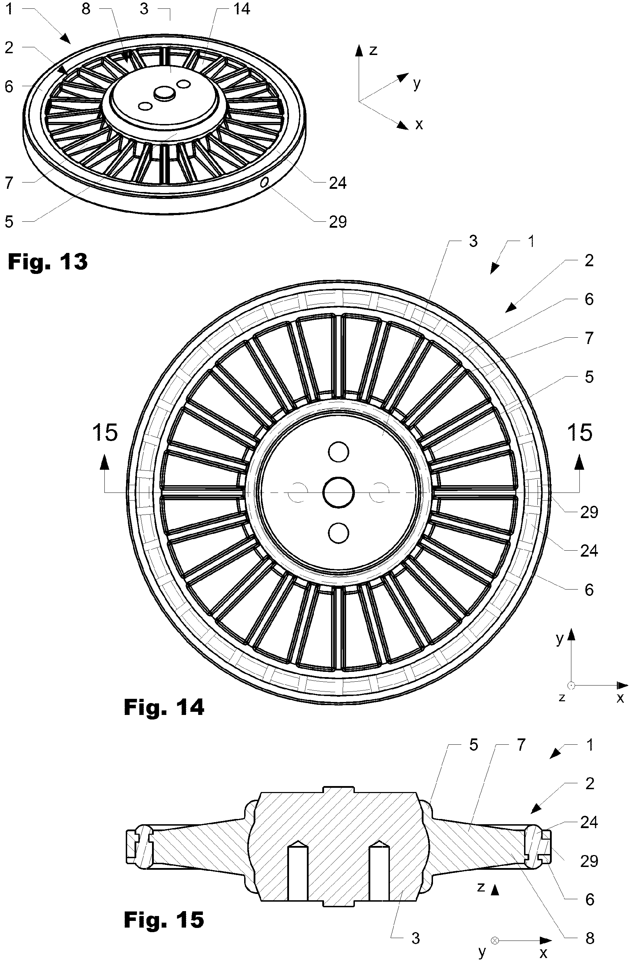

EP2273641 was filed in the name of ABB Technology AG and published in January 2011. It discloses a spacer for a gas insulated device. The spacer comprises an insulator disc and an armature extending around an outer periphery of the insulator disc and foreseen to hold the insulator disc. For producing the spacer an armature is positioned in a first molding cavity of a molding machine such that a second molding cavity is formed. An insulation material is brought into the second cavity and then cured such that the armature holds the insulator disc therein thus forming the insulator. The armature ring of an insulator may have a through channel (see [0056] and Fig. 13) extending across the ring in a radial direction and used for casting the mold.

JP2006340557A was filed in the name of Mitsubishi Electric Corp. and published in December 2006. It is directed to a disc-like member composed of an injection molded insulator. The leakage of insulating gas is blocked by an O-ring fitted in an annular groove. The O-ring can be prevented from falling when the instrument is assembled in that it is fitted in an annular groove formed around the central axis of the disc-like member.

JP2004104897A was filed in the name of Fuji Electronic Holding Ltd. is directed to the production of a spacer for a gas-insulated electrical apparatus using thermoplastic resin which can be easily recycled. An insulation body of the spacer is divided into a plurality of layers in the axial direction of a conductor. Each of the layers is formed using a thermoplastic resin and the divided bodies are integrally combined. By dividing an insulation body the thickness of each of the divided bodies can be made reduced, thus enabling injection molding by the thermoplastic resin of each of the divided bodies. The layers are combined so as to be in a hollow shell condition, and partially or totally jointed by adhesion, fitting, or fusing, thus obtaining required mechanical strength and insulation strength. One drawback of this solution is that the insulator tends to comprise inclusions which are taking influence on the electrical field. A further drawback is the difficulty in the production of the product.

US4458100 was assigned to Westinghouse Electric Corp. and published in 1984. It is directed to a gas insulated transmission line having an insulator for supporting an inner conductor concentrically within an outer sheath. A common insulator used for supporting the inner high voltage conductor within the outer conductor. A material, such as epoxy, is selected which has a coefficient of expansion similar to the metal selected for the inner conductor so as to minimize the possibility of voids being formed at the critical interface where the insulator meets the conductor.

US4263476 was assigned to Electric Power Research Institute and published in 1979. It is directed to an injection molded insulator with a single insulator structure which is used in an elongated flexible gas-insulated cable. The insulator is made of two halves which are latched together and are made of any suitable plastic material by an injection molding process. It is described that the insulator would preferably be used in a flexible gas-insulated cable for a high voltage transmission system having a relatively low frequency (60 Hertz) at high voltage (345'000 volts). The central conductor of the cable is supported by the insulator within an outer corrugated housing. The housing is filled with an electronegative gas, such as SF6 at a positive pressure, for example, two to three atmospheres.

EP2062268 was filed in the name of Areva SA. and was published in March 2008. It is directed to an insulating support for a high-voltage or medium-voltage device. The insulating support is based on an insulating polymeric material comprising at least at one of its ends a zone comprising a composite material comprising a matrix made of an insulating polymeric material with an electrically conducting filler which is a polymeric filler possibly encapsulating a mineral filler.

US7795541B was assigned Areva AG. It was first published in 2006 and relates to an insulating device for medium or high voltage electrical equipment in the shape of a disc inside an enclosure acting as a support for an electrical conductor. The disc is made of thermoplastic polyester. The disc can be worked starting from a thick board using conventional machining tools and it can be provided with particular arrangements, for example to facilitate its assembly or connection of conductors supported on it.

EP 2 083 426 A1 describes a bushing comprising an electrically insulating body provided with a through hole and formed by an injection-mouldable, dielectric material, and a sealing provided in said through hole and provided with a through hole for the receipt of an electric conductor.

EP 1 294 064 A2 describes a device having at least one thermoplastic leadthrough protruding from the gas container side wall of the relevant switch field or module with an end surface and an electrical contact, an annular elastic insulation part between the opposing surfaces of the leadthroughs for electrically sealing the contact connection and a pressure ring that presses the leadthrough ends against the insulating part. EP 1 294 064 A2 discloses the preamble of claim 1.

US 4 415 762 A describes a soft silicone rubber insert which is compressed between the interior surface of an insulator support in a gas-insulated cable and the outer surface of a soft aluminum central conductor which is supported within the interior surface of an opening in the insulator.

JP S59 85526 U describes a single plate that has protrusions in the longitudinal direction of a cable on a conductor side.

US 4 122 298 A describes a support insulator for a flexible gas-insulated transmission line which is formed in two halves which can be snapped together and over the central conductor of the transmission line.

### SUMMARY OF THE INVENTION

The invention is defined by the features of the independent claims. Preferred embodiments are defined by the features of the dependent claims.

The present invention is directed to an insulator according to claim 1 for electrical insulation, e.g. in switchgear such as a gas insulated device, wherein the insulator comprises an injection molded insulator disc and a conductor. The insulator disc comprises a center opening encompassed by an inner bead inside which the conductor is arranged. The insulator disc consists out of a material which is injection molded onto the conductor.

The insulator is made out of a thermoplastic material, which overcomes the disadvantages inherent to the prior art. The thermoplastic material preferably used is of ductile nature and therefore more fail safe. At least the insulator disc is produced by injection molding, which provides the following advantages: reduced cycle time, increased degree of automation and less complicated material preparation. However, the wall thickness may be limited, e.g. less than 10mm.

The insulator disc comprises structural components, such as ribs to increase stiffness and durability. If required the insulator disc may be built-up by a multi-stage injection molding process where structural parts and/or different materials are integrally combined to form the insulator disc or part of it.

The insulator according to the invention comprises an injection molded insulator disc and a conductor. The insulator disc comprises a center opening encompassed by an inner bead inside which the conductor is arranged. The insulator disc further comprises an outer bead encompassing the insulator disc. The insulator disc is injection molded onto the conductor. In an embodiment the insulator disc is directly injection molded onto an outer surface of the conductor. Alternatively or in addition an intermediate layer is arranged between the conductor and the insulator disc. The intermediate layer is e.g. a primer. The conductor may comprise teeth which are directly or indirectly engaged with the insulator disc for form fit. An example of an indirect connection is achievable a conductor that is already coated with a field electrode, for example, prior to inserting said coated conductor into the cavity of the mold. The term 'teeth' shall not be understood as a jagged structure in a narrow sense since sharp edges shall be avoided for dielectric reasons. The term 'teeth' shall be rather understood in a broad sense as a representative term for any suitable locking means for establishing a form fit by a variation in diameter relative to the center axis of the insulator. That engaging means blocks the insulator body from being stripped off the conductor in an axial direction easily, i.e. in the direction of the center axis of the insulator. In a basic embodiment said locking means comprises one single rounded tooth that is established by a bulge extending circumferentially and radially on the shell surface of the conductor. After injection molding of the insulator body/disc, said insulator body/disc features in its center opening a shape being the negative to said bulge such that a good form fit in between the conductor and the insulator disc is achievable. Moreover, the locking means serves for increasing an overall contact surface in between the conductor and the insulator disc.

The inner bead can at least partially be distanced by a gap from the conductor. If appropriate a transition means is arranged in the gap interconnecting the inner bead and the conductor. A holding means may be arranged inside the gap positioning the conductor with respect to the insulator disc. The holding means may be at least one circumferential holding rib and/or at least one holding rib arranged in axial direction (axial holding rib). The holding means may be integrally connected to the insulator disc. The first material may be injected by at least one first distribution channel arranged within the conductor. The term 'first material' shall not be understood narrow in that it consists of one single material such as PET, for example, but broad in that it may be a material composition. However, a more detailed explanation will follow in this disclosure.

The inner and/or the outer bead are strut by ribs. The ribs and the wall may have in general the same wall thickness. The ribs are arranged in a radial direction. A method for the production of an insulator according to the invention comprises the steps as defined in claim 10.

If appropriate the first material is injected through at least one channel arranged inside the conductor.

At least one part of the mold may be arranged movable to reduce the volume of the cavity and thereby compressing the material in the cavity after and/or during injection of the liquefied material. By this compression step the quality of the surface of the insulator disc can be improved.

The injection compression molding process can further increase the advantages of the injection molding process, especially help to reduce residual stress in the part through the evenly distributed pressure throughout the mold cavity during the compression step. This favorable pressure distribution will also lead to a superior surface quality - when used in combination with a mirror polished mold cavity surface. A further advantage of an insulator surface having a surface roughness that is as low as possible resides in that the electric field is locally less intensified at the insulator surface compared to an insulator surface having a higher roughness. Hereinafter, the term surface roughness is to be understood as the surface quality, i.e. the amount of the vertical deviations of a real surface from its ideal form. These deviations relate to the size and the number of peaks/valleys on the surface of a body in general. If these deviations are large, the surface is rough; if they are small the surface is smooth. The lower the surface roughness value is, the lower locally intensified the electric fields are once the insulator disc is in an operating state of the high voltage gas insulated device. This explanations relating to the effects and advantages arising of the injection compression molding is not limited to this particular embodiment and applies likewise to all remaining embodiments disclosed in the present application.

In an embodiment the first material is at least one out of the group of the following materials: polyesters (e.g. polyethylene terephthalate, polybutylene terephthalate), polyamide (PA), polysulfone (e.g. PES), polyetherimide (PEI), polyphenylene sulfide (PPS), polyether ether ketone (PEEK ), polyphthalamide (PPA), polypropylene (PP), polyoxymethylene (POM), phenol formaldehyd (PF), unsatured polyester (UP), polyurethane (PUR and PU). The first material may comprise at least one filler material out of the group of the following filler materials: Polyamide, polyimide, polyester, polyvinyl alcohol, polyvinylidene chloride, polyacrylonitrile, polyurethane, polyalkylene paraoxybenzoate, phenol type, wool, silk, cotton, rayon, cellulose acetate, flax, ramie, jute, aramid fibres, glass, sepiolite, potassium titanate, ceramic, alumina, calcium silicate, rock wool.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: a first embodiment of an insulator in a perspective view not being part of the invention;
- Fig. 2: the first embodiment in a front view not being part of the invention;
- Fig. 3: a section view of the first embodiment along section line 3-3 according to Fig 2 not being part of the invention;
- Fig. 4: a second embodiment of the insulator in a perspective view not being part of the invention;
- Fig. 5: an conductor of the second embodiment in a perspective view not being part of the invention;
- Fig. 6: the second embodiment in a front view not being part of the invention;
- Fig. 7: a section view of the second embodiment along section line 7-7 according to Fig. 6 not being part of the invention;
- Fig. 8: a third embodiment of the insulator in a perspective view not being part of the invention;
- Fig. 9: the third embodiment in a front view not being part of the invention;
- Fig. 10: a section view of the third embodiment along section line 10-10 according to Fig. 9 not being part of the invention;
- Fig. 11: a fourth embodiment of the insulator in a perspective view partially cut not being part of the invention;
- Fig. 12: the fourth embodiment according to Fig. 11 with a second material component not being part of the invention;
- Fig. 13: a fifth embodiment of the insulator in a perspective view not being part of the invention;
- Fig. 14: the fifth embodiment in a front view not being part of the invention;
- Fig. 15: a section view of the fifth embodiment along section line 15-15 according to Fig. 14 not being part of the invention;
- Fig. 16: a sixth embodiment of the insulator in a perspective view not being part of the invention;
- Fig. 17: the sixth embodiment in a front view not being part of the invention;
- Fig. 18: a section view of the sixth embodiment along section line 18-18 according to Fig. 17 not being part of the invention;
- Fig. 19: a seventh embodiment of the insulator according to the present invention in a perspective view;
- Fig. 20: the seventh embodiment in a front view;
- Fig. 21: a section view of the seventh embodiment along section line 21-21 according to Fig. 20;
- Fig. 22: an eight embodiment of the insulator in a perspective view not being part of the invention;
- Fig. 23: the eight embodiment in a front view not being part of the invention;
- Fig. 24: a section view of the eight embodiment along section line 24-24 according to Fig. 23 not being part of the invention.

### DESCRIPTION OF THE EMBODIMENTS

The foregoing summary, as well as the following detailed description of the preferred embodiments, is better understood when read in conjunction with the appended drawings. For the purposes of illustrating the invention, there are shown in the drawings several embodiments in which like numerals represent similar parts throughout the several views of the drawings, it being understood, however, that the invention is not limited to the specific methods and instrumentalities disclosed.

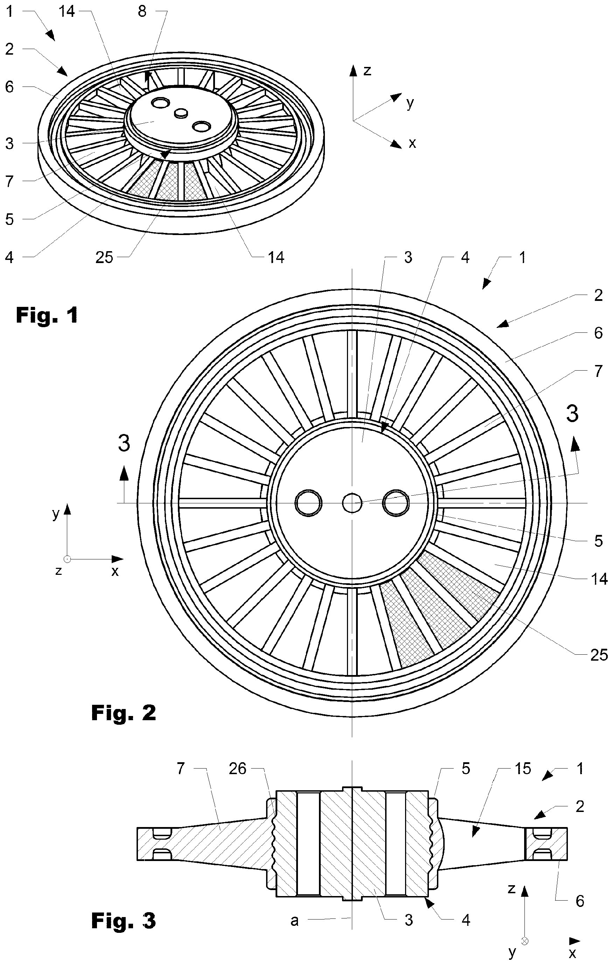

Figure 1 shows a first embodiment of an insulator 1 not being part of the present invention in a perspective view. Figure 2 shows the insulator according to Figure 1 in a front view and Figure 3 shows the insulator 1 in section view along section line 3-3 according to Figure 2.

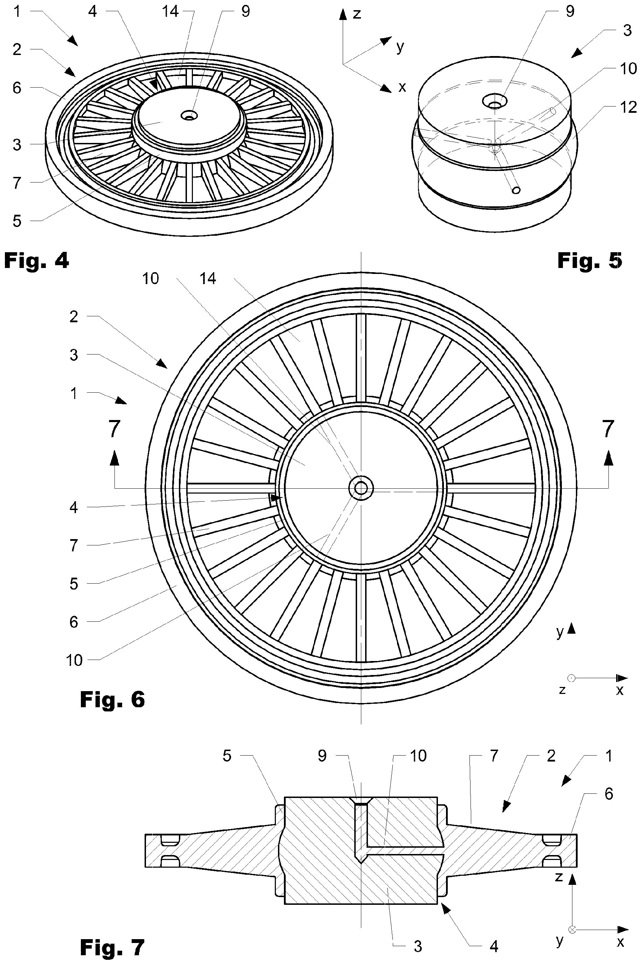

Figure 4 shows a second embodiment of an insulator 1 not being part of the present invention in a perspective view. Figure 5 shows a conductor 3 in a perspective view. Figure 6 shows the insulator 1 according to Figure 4 in a front view and Figure 7 shows the insulator 1 in section view along section line 7-7 according to Figure 6. The section view reveals that a locking means in between the insulator disc 2 and the conductor 3 is achieved in that the latter comprises a bulge extending circumferentially and radially on the shell surface of the conductor. After injection molding of the insulator body/disc, said insulator body/disc features in its center opening a shape being the negative to said bulge such that a good form fit in between the conductor and the insulator disc is achievable.

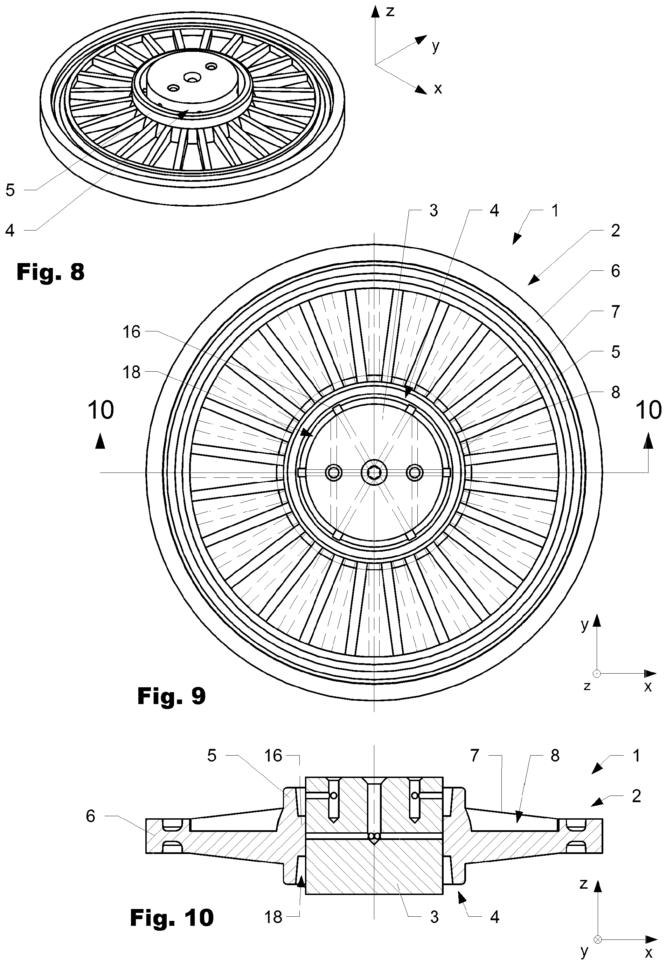

Figure 8 shows a third embodiment of an insulator 1 not being part of the present invention in a perspective view. Figure 9 shows the insulator 1 according to Figure 8 in a front view and Figure 10 shows the insulator 1 in section view along section line 10-10 according to Figure 9.

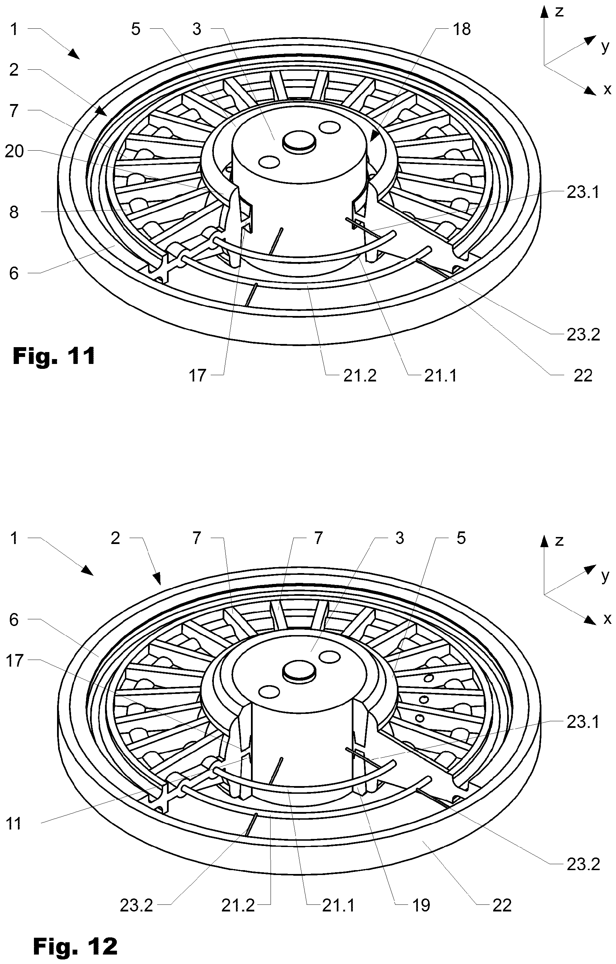

Figure 11 shows a fourth embodiment of an insulator 1 not being part of the present invention in a perspective view and in partially cut manner such that the inside of the insulator 1 becomes visible. Figure 12 shows the insulator according to Figure 11 and comprising a second material component as will be described in more detail subsequent.

Figure 13 shows a fifth embodiment of an insulator 1 not being part of the present invention in a perspective view. Figure 14 shows the insulator according to Figure 13 in a front view and Figure 15 shows the insulator 1 in section view along section line 15-15 according to Figure 14.

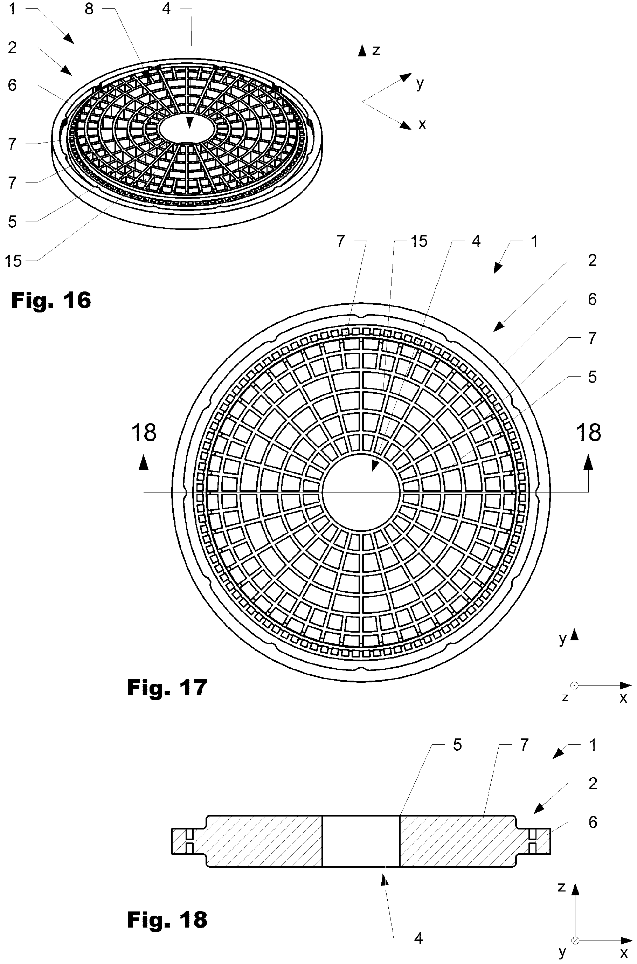

Figure 16 shows a sixth embodiment of an insulator disc 2 not being part of the present invention in a perspective view. Figure 17 shows the insulator disc 2 according to Figure 16 in a front view and Figure 18 shows the insulator disc 2 in section view along section line 18-18 according to Figure 17.

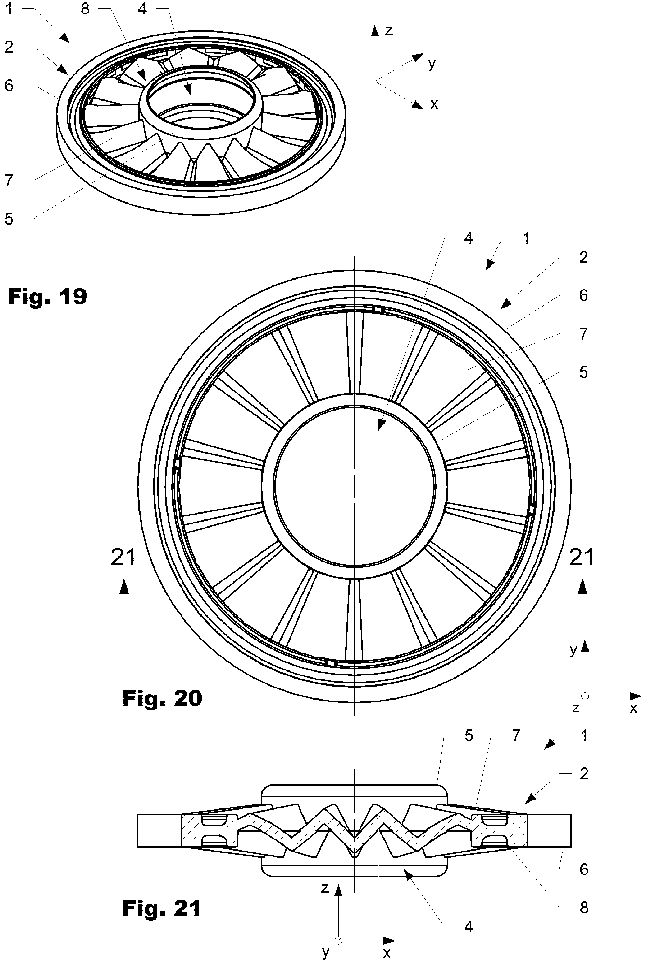

Figure 19 shows a seventh embodiment of an insulator disc 2 according to the present invention in a perspective view. Figure 20 shows the insulator disc 2 according to Figure 19 in a front view and Figure 21 shows the insulator disc 2 in section view along section line 21-21 according to Figure 20.

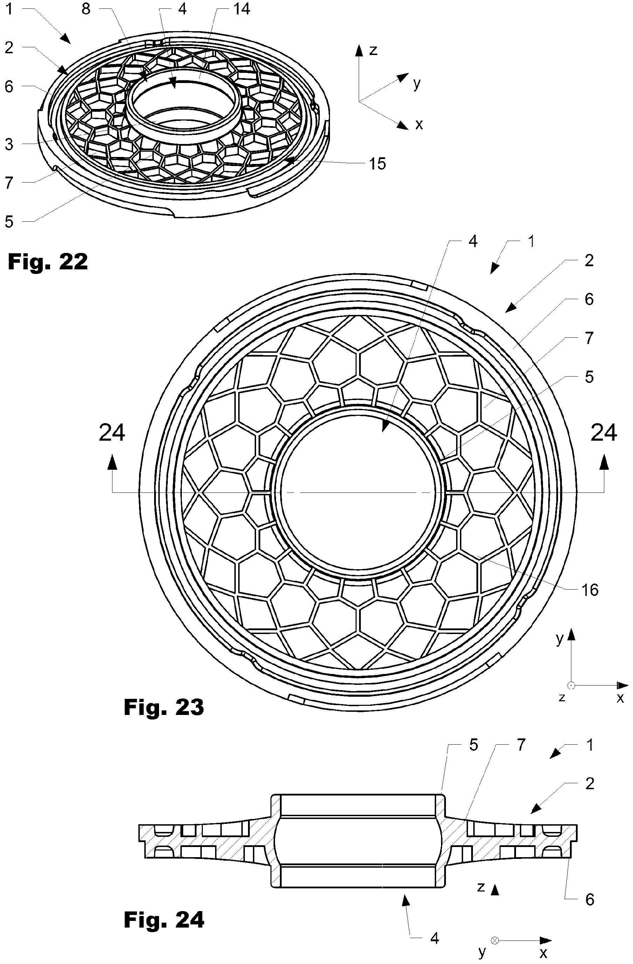

Figure 22 shows a eight embodiment of an insulator disc 2 not being part of the present invention in a perspective view. Figure 23 shows the insulator disc 2 according to Figure 22 in a front view and Figure 24 shows the insulator disc 2 in section view along section line 23-23 according to Figure 23.

The insulator 1 according to the present invention in general comprises a conductor 3 which is arranged in a center opening 4 of an insulator disc 2. The insulator disc 2 comprises an inner bead 5 and an outer bead 6 which delimit the insulator disc 2 with respect to the inside and to the outside. The inner and/or the outer bead 5, 6 are strut by radial reinforcement ribs 7 to increase the mechanical stability of the insulator disc 2. The radial reinforcement ribs 7 can be arranged protruding on at least one side above a wall 14.

The insulator discs 2 of the shown embodiments are made by injection molding of a first material. The injection molding process can be performed in one or several steps whereby the conductor 3 is placed inside of a mold (not shown in detail) for the injection molding process of the insulator disc 2. The mold preferably comprises an adapter which is foreseen to receive and hold a conductor during the injection molding process. The adapter can be designed exchangeable such that different conductors can be processed with the same mold or the same adapter can be used in different molds for the production of different insulator discs 2. For injection molding of the at least one material the mold may comprise appropriate means, e.g. in the form of appropriate connection channels, to interconnect to at least one of the channels arranged in the conductor. Alternatively or in addition the mold can be designed such that the conductor is directly accessible form the outside, i.e. the mold comprises an opening through which the conductor, respectively the channels arranged in the conductor, are accessible from the outside when the conductor is arranged inside of the closed mold.

The insulator disc 2 is injection molded onto the conductor 3. In certain embodiments, not part of the present invention, the conductor 3 and the insulator disc 2 are at least partially spaced apart by a gap 18 which is at least partially filled with a second material to form a transition means 19.

The first embodiment of the insulator 1 as shown in the Figures 1 through 3 comprises an insulator disc 2 with an inner bead 5 and an outer bead 6. The inner bead 5 surrounds a center opening 4 in which a conductor 3 is arranged in a coaxial manner. The insulator disc 2 is injection molded onto the conductor 3 providing a firm bonding between the interacting surfaces. If appropriate the interacting surface of the conductor 3 can be coated by an appropriate material and/or undertaken a surface treatment to increase the bonding process. As it can be seen in the section view according to Figure 3 the conductor 3 comprises teeth 26 which form fit with the insulator disc 2.

In this embodiment the inner and the outer bead 5, 6 are strut by radial reinforcement ribs 7 which are evenly distributed in circumferential direction. As it can be seen in Figure 3 the radial reinforcement ribs 7 have a conical shape with a thickness which is decreasing in radial direction. The radial reinforcement ribs 7 are arranged perpendicular to a center axis a. If appropriate the ribs 7 can be arranged at an angle (i.e. in a skew manner) with respect to the center axis a. Between the radial reinforcement ribs 7 a wall 14 is arranged in circumferential direction. If required the wall 14 can be omitted and being replaced by an opening (cross port) 15. The cross port 15 prevent that the two adjacent sections of the gas insulated device are hermetically sealed with respect to each other. If required the space between two reinforcement ribs can be at least partially filled with filler 25 made out of a third material (schematically indicated by hatched area) as mentioned above. If required the complete side surface or only specific parts of it can be covered by the third and/or a fourth material.

The second embodiment of the insulator 1 as shown in the Figures 4 through 7 in general corresponds to the first embodiment as mentioned above. The second embodiment comprises an insulator disc 2 which is injection molded onto the conductor 3.

For making of an insulator 1 the following steps are normally executed:
a. Providing a mold with a cavity which at least partially corresponds to the insulator disc 2 for injection molding of the insulator disc 2 as shown and described;
b. Arranging inside the of the mold a conductor 3;
c. Injecting of a first material into the mold to form the insulator disc 2, such the conductor 3 is positioned inside of the center opening 4 and the inner bead 5 of the insulator disc 2 and the conductor 3 are firmly inter-connected directly or indirectly.
d. removing of the insulator disc 2 and the conductor 3 from the mold.

In the shown embodiment the conductor 3 comprises an injection opening 9 which is interconnected to first distribution channels 10.1 which serve during making of the insulator disc 2 to distribute the material injected through the injection opening 9 into the cavity of the mold (both not shown in detail). Thereby it is achieved that the insulator disc has a uniform surface without surfaces inhomogeneities caused by common injection nozzles.

As it can be seen in Figures 5 and 6 the first distribution channels 10.1 here have a star-like arrangement. An increased number of first distribution channels 10.1 may support the uniform distribution of the material during the injection molding process. For manufacturing of the insulator disc 2 the conductor 3 is positioned in the mold (not shown in detail) which normally is at least partially a negative of the final insulator disc 2 to be made, then the mold is closed and first material is injected in liquid form through the injection opening 9 into the distribution channels 10.1 until the mold to form the insulator disc 2 is sufficiently filled. Before the first material is injected the conductor 3 can be heated until a certain temperature is achieved. This can improve the results of the injection molding process. After the material has cured the mold is opened and the conductor 3 and the insulator disc 2 are removed. If appropriate the insulator disc 2 can be made in multi-stage injection molding process whereby the insulator disc 2 is build up in several stages. The conductor 3 may be equipped with further distribution channels which can be used to inject at least one further material.

The conductor 3 of the third embodiment according to Figures 8 through 10 is also used to inject the first material to form the insulator disc 2 at least partially. The conductor 3 therefore comprises an injection opening 9 and first distribution channels 10.1 to which an injection nozzle (not shown in detail) can be connected for injecting of the first material to form the insulator disc 2 as described below. As it can be seen in Figure 9 the distribution channels 10.1 have a star-like arrangement each having the same length with respect to the injection opening 9. The distribution channels 10.1 are aligned to axial holding ribs 16 through which the material injection takes place during the manufacturing step. This supports the uniform distribution of the material during the injection molding process of the insulator disc 2. For manufacturing of the insulator disc 2 the conductor 3 is positioned in a mold (not shown in detail) which normally is at least partially a negative of the final insulator disc 2 to be made, then the mold is closed and first material is injected in liquid form through the injection opening 9 into the distribution channels 10.1 until the mold to form the insulator disc 2 is sufficiently filled. The first material enters into the mold through the holding ribs 16. Before the first material is injected the conductor 3 can be heated until a certain temperature is achieved. This can improve the results of the injection molding process and prevents unwanted freezing of the first material. After the first material has cured the mold is opened and the conductor 3 and the insulator disc 2 are removed. If appropriate the insulator disc 2 can be made in multi-stage injection molding process whereby the insulator disc 2 is build up in several stages. As visible in Figures 9 and 10, the conductor 3 may be equipped with second distribution channels 10.2 which can be used to inject the second material in a gap 18 to form a transition means 19 between the insulator disc 2 and the conductor 3. The second distribution channels 10.2 can be avoided and the transition means 19 can be made by adding the material in a different way, e.g. by a robot or manually.

In the center opening 4 of the fourth embodiment according to Figures 11 and 12 a holding means in the form of a circumferential holding rib 17 is visible which on the inner end merges into a thickening 11 inside which the conductor 3 can be positioned and held as shown in Figure 11. In axial direction above and below the circumferential holding rib 17 the gap 18 extends which is filled by the second material as shown in Figure 12 to form the transition means 19. The holding means may comprise at least one lateral 20.

If appropriate the conductor 3 can comprise first and/or second distribution channels to injection molding of plastic material in the sense of the embodiment shown above. If first distribution channels are present they are preferably interconnected to the thickening 11 which acts as a circumferential channel to distribute material in circumferential direction and to uniformly distribute the material through gap formed in the mold in the area of the circumferential rib 17 which acts as a nozzle to introduce and uniformly distribute the material in the insulator disc 2.

In the fourth embodiment according to Figures 11 and 12 the insulator disc 2 is encompassed by an outer ring 22 made out of a conductive material. Examples for suitable materials are a ferromagnetic alloy or a polymer with a carbonaceous content. Two field control elements 21.1, 21.2 are embedded in the insulator disc 2. The inner field control element 21.1 is electrically inter-connected by an inner connecting element 23.1 to the conductor 3. The outer field control element 21.2 is electrically interconnected by an outer connecting element 23.2 with the outer ring 22.

The fifth embodiment according to Figures 13 through 15 in general corresponds to the other embodiments mentioned above. As it can be seen in the section view according to Figure 15 the insulator disc 2 comprises a seal 24 which penetrates the insulator disc 2 through axial openings 28 in the insulator disc 2. The seal 24 is preferably made by an injection molding process. Therefore the insulator disc 2 is placed in an injection mold and a third or a fourth material is injected to form the seal. In the shown embodiment the material for the seal may be injected through a radial opening 29 in the outer bead 6.

Figures 16 through 18 are showing a sixth embodiment of an insulator disc 2 suitable to be used in an insulator 1 not being part of the herein described invention. The insulator disc 2 has in general the same design as the foregoing insulator discs 2. Regarding to the general explanations it is therefore referred to those. The insulator disc 2 is made by injection molding of a first material. It comprises radial and circumferential reinforcement ribs 7, 30. The circumferential reinforcement ribs 30 are arranged coaxial between the inner and the outer bead forming closed circles. Some of the radial reinforcement ribs 7 interconnect the inner and the outer bead 5, 6. Other radial reinforcement ribs 7 have a shorter design and extend in the outer region of the insulator disc 2 between the outer bead 6 and a circumferential reinforcement rib 30. The shown insulator disc is preferable for insulators having a relatively large diameter. As it can be seen the radial and the circumferential reinforcement ribs 7, 30 all have the same thickness in axial direction which is only reduced in the region of the outer bead 6. Between the reinforcement ribs 7, 30 a wall 14 extends which prevents leaking. If required at least one cross port (not shown in detail) can be foreseen for exchange of insulator gas as mentioned above.

Figures 19 through 21 are showing a seventh embodiment of an insulator disc 2 suitable to be used in an insulator 1 according to the herein described invention. The insulator disc 2 has in general the same design as the foregoing insulator discs 2. Regarding to the general explanations it is therefore referred to those. The insulator disc 2 is made by injection molding of a first material. As it can be seen in Figure 21 the axial reinforcement ribs 8 have a wave-like cross-section. This offers the advantage that the side surfaces 8.1, 8.2 can easily be cleaned especially during assembly of the device. Furthermore the reinforcement ribs offer a high mechanical durability and a low material consumption. A further advantage is that the material during injection molding is equally distributed.

Figures 22 through 24 are showing an eight embodiment of an insulator disc 2 suitable to be used in an insulator 1 not being part of the herein described invention. The insulator disc 2 has in general the same design as the foregoing insulator discs 2. Regarding to the general explanations it is therefore referred to those. The insulator disc 2 is made by injection molding of a first material. The reinforcement ribs 7 have a comb-like design which supports the distribution of the occurring forces.

**LIST OF DESIGNATIONS**

| | | | |
|---|---|---|---|
| a | Center axis | 17 | Circumferential rib (holding means) / Nozzle |
| 1 | Insulator | | |
| 2 | Insulator disc | 18 | Gap |
| 3 | Conductor | 19 | Transition means / Adhesive material |
| 4 | Center opening | | |
| 5 | Inner bead | 20 | Lateral opening |
| 6 | Outer bead | 21 | 21.1: Inner field control element / conductor |
| 7 | Reinforcement rib | | |
| 8 | 8.1: First Side surface (insulator disc) | | 21.2: Outer field control element / flange |
| | 8.2: Second Side surface (insulator disc) | 22 | Flange (outer ring) |
| | | 23 | 23.1: Connecting element (field control element / conductor) |
| 9 | Injection opening | | |
| 10 | 10.1: First distribution channel | | 23.2: Connecting element (field control element / flange) |
| | 10.2: Second distribution channel | | |
| 11 | Distribution chamber / circumferential channel | 24 | Seal |
| | | 25 | Filler (Material filled in between ribs) |
| 12 | Outer surface (conductor) | | |
| 13 | Distribution opening | 26 | Teeth (Locking element) |
| 14 | Wall (between ribs) | | |
| 15 | Cross port (opening) | | |
| 16 | Axial rib (holding means) | | |

## Claims

1. Insulator (1) for a gas insulated device, comprising
an injection molded and single-bodied insulator disc (2) and a conductor (3), wherein
the insulator disc (2) comprises a center opening (4) encompassed by an inner bead (5) inside which the conductor (3) is arranged and an outer bead (6) encompassing the insulator disc (2),
the insulator disc (2) consists of a first material which is injection molded onto the conductor (3),
the insulator (1) defines a center axis (a) by its cylindrical overall shape, **characterized in that**
at least one of the inner bead (5) and the outer bead (6) is strut by a plurality of ribs (7) arranged on at least one of a first side surface (8.1) and a second side surface (8.2) of the insulator disc (2) such that a rib structure (7) is formed,
the ribs (7) are arranged in a radial direction with respect to the center axis (a) such that the ribs (7) have a wave-like cross-section extending in the radial direction, and
the cross-section is defined by the intersection of a plane parallel to the center axis ( a) of the insulator (1) and passing between the inner and the outer bead (5, 6) with the insulator (1).

2. The insulator (1) according to claim 1, whereby the insulator disc (2) is directly injection molded onto an outer surface of the conductor (3).

3. The insulator (1) according to one of the previous claims, whereby an intermediate layer formed by a primer is arranged between the conductor (3) and the insulator disc (2).

4. The insulator (1) according to one of the previous claims, whereby the conductor comprises teeth (26) which are directly or indirectly engaged with the insulator disc (2).

5. The insulator (1) according to one of the previous claims, whereby the first material is injected by at least one first distribution channel (10.1) arranged within the conductor (3).

6. The insulator (1) according to one of the previous claims, whereby the inner bead (5) and the outer bead (6) is strut by the plurality of ribs (7), wherein the ribs (7) interconnect the inner bead (5) and the outer bead (6).

7. The insulator (1) according to one of the previous claims, whereby the first material comprises at least one material selected from the group of the following materials: PET, PBT, PA, PES, PEI, PPS, PEEK, PPA, PP, POM, PF, phenol formaldehyd resin, UP, unsatured Polyester, PUR.

8. The insulator (1) according to one of the previous claims, whereby the first material comprises at least one filler material selected from the group of the following filler materials: Polyamide, polyimide, polyester, polyvinyl alcohol, polyvinylidene chloride, polyacrylonitrile, polyurethane, polyalkylene paraoxybenzoate, phenol type, wool, silk, cotton, rayon, cellulose acetate, flax, ramie, jute, aramid fibres, glass, sepiolite, potassium titanate, ceramic, alumina, calcium silicate, rock wool.

9. A medium voltage or high voltage switchgear comprising at least one insulator (1) according to any one of the previous claims.

10. Method for the production of an insulator (1) according to one of claims 1 to 8, said method comprising the following steps:
a. Providing a mold for injection molding of the insulator disc (2) of the insulator (1)
b. Arranging a conductor (3) in a cavity of the mold;
c. Injecting a first material into the mold to form the insulator disc (2), such that the conductor (3) is positioned inside of the center opening (4) and the inner bead (5) of the insulator disc (2) and the conductor (3) are firmly interconnected directly or indirectly.
d. removing of the insulator disc (2) and the conductor (3) from the mold.

11. Method according to claim 10, whereby the first material is injected through at least one channel (10.1) arranged inside the conductor (3).

12. Method according to claim 10, whereby at least one part of the mold is arranged movable to reduce the volume of the cavity and thereby compressing the material in the cavity after and/or during injection of the liquefied material.

## Patentansprüche

1. Isolator (1) für eine gasisolierte Vorrichtung, der Folgendes umfasst:
eine spritzgegossene und einstückige Isolatorscheibe (2) und einen Leiter (3), wobei
die Isolatorscheibe (2) eine mittlere Öffnung (4), die von einer inneren Wulst (5) umschlossen wird, innerhalb der der Leiter (3) angeordnet ist, und eine äußere Wulst (6), die die Isolatorscheibe (2) umschließt, umfasst,
die Isolatorscheibe (2) aus einem ersten Material besteht, das auf den Leiter (3) spritzgegossen ist,
der Isolator (1) durch seine zylindrische Gesamtform eine mittlere Achse (a) definiert, **dadurch gekennzeichnet, dass**
zumindest eine aus der inneren Wulst (5) und der äußeren Wulst (6) durch mehrere Rippen (7) verstrebt ist, angeordnet an zumindest einer aus einer ersten Seitenoberfläche (8.1) und einer zweiten Seitenoberfläche (8.2) der Isolatorscheibe (2), sodass eine Rippenstruktur (7) gebildet ist,
die Rippen (7) in einer radialen Richtung bezüglich der mittleren Achse (a) angeordnet sind, sodass die Rippen (7) einen wellenartigen Querschnitt aufweisen, der sich in die radiale Richtung erstreckt, und
der Querschnitt durch den Schnitt einer Ebene parallel zur mittleren Achse (a) des Isolators (1) definiert ist und zwischen der inneren und der äußeren Wulst (5, 6) mit dem Isolator (1) verläuft.

2. Isolator (1) nach Anspruch 1, wobei die Isolatorscheibe (2) direkt auf eine äußere Oberfläche des Leiters (3) spritzgegossen ist.

3. Isolator (1) nach einem der vorhergehenden Ansprüche, wobei eine durch eine Grundierung gebildete Zwischenschicht zwischen dem Leiter (3) und der Isolatorscheibe (2) angeordnet ist.

4. Isolator (1) nach einem der vorhergehenden Ansprüche, wobei der Leiter Zähne (26) umfasst, die in direktem oder indirektem Eingriff mit der Isolatorscheibe (2) sind.

5. Isolator (1) nach einem der vorhergehenden Ansprüche, wobei das erste Material durch zumindest einen innerhalb des Leiters (3) angeordneten ersten Verteilungskanal (10.1) eingespritzt wird.

6. Isolator (1) nach einem der vorhergehenden Ansprüche, wobei die innere Wulst (5) und die äußere Wulst (6) durch die mehreren Rippen (7) verstrebt sind, wobei die Rippen (7) die innere Wulst (5) und die äußere Wulst (6) miteinander verbinden.

7. Isolator (1) nach einem der vorherigen Ansprüche, wobei das erste Material zumindest ein Material umfasst, das aus der Gruppe der folgenden Materialien ausgewählt wird: PET, PBT, PA, PES, PEI, PPS, PEEK, PPA, PP, POM, PF, Phenolformaldehydharz, UP, ungesättigtes Polyester, PUR.

8. Isolator (1) nach einem der vorherigen Ansprüche, wobei das erste Material zumindest ein Füllmaterial umfasst, das aus der Gruppe der folgenden Füllmaterialien ausgewählt wird: Polyamid, Polyimid, Polyester, Polyvinylalkohol, Polyvinylidenchlorid, Polyacrylnitril, Polyurethan, Polyalkylenparaoxybenzoat, Phenoltyp, Wolle, Seide, Baumwolle, Viskose, Zelluloseacetat, Flachs, Chinagras, Jute, Aramidfasern, Glas, Sepiolit, Kaliumtitanat, Keramik, Tonerde, Calciumsilikat, Steinwolle.

9. Mittelspannungs- oder Hochspannungsschaltanlage, umfassend zumindest einen Isolator (1) nach einem der vorhergehenden Ansprüche.

10. Verfahren zur Herstellung eines Isolators (1) nach einem der Ansprüche 1 bis 8, wobei das Verfahren die folgenden Schritte umfasst:
a. Bereitstellen einer Form für Spritzgießen der Isolatorscheibe (2) des Isolators (1);
b. Anordnen eines Leiters (3) in einem Hohlraum der Form;
c. Einspritzen eines ersten Materials in die Form zum Bilden der Isolatorscheibe (2), sodass der Leiter (3) innerhalb der mittleren Öffnung (4) positioniert ist und die innere Wulst (5) der Isolatorscheibe (2) und der Leiter (3) direkt oder indirekt fest miteinander verbunden sind;
d. Entfernen der Isolatorscheibe (2) und des Leiters (3) aus der Form.

11. Verfahren nach Anspruch 10, wobei das erste Material durch zumindest einen im Inneren des Leiters (3) angeordneten Kanal (10.1) eingespritzt wird.

12. Verfahren nach Anspruch 10, wobei zumindest ein Teil der Form bewegbar angeordnet ist, um das Volumen des Hohlraums zu verringern und dadurch nach und/oder während der Einspritzung des verflüssigten Materials das Material im Hohlraum zusammenzudrücken.

## Revendications

1. Isolateur (1) pour un dispositif à isolation gazeuse, comprenant
un disque d'isolateur (2) moulé par injection et en un seul corps, et un conducteur (3),
le disque d'isolateur (2) comprenant une ouverture centrale (4) entourée par un bourrelet intérieur (5) à l'intérieur de laquelle le conducteur (3) est agencé et un bourrelet extérieur (6) entourant le disque d'isolateur (2),
le disque d'isolateur (2) consistant en un premier matériau qui est moulé par injection sur le conducteur (3),
l'isolateur (1) définissant un axe central (a) par sa forme globale cylindrique, **caractérisé en ce que**
au moins un parmi le bourrelet intérieur (5) et le bourrelet extérieur (6) est supporté par une pluralité de nervures (7) agencées sur au moins une parmi une première surface latérale (8.1) et une deuxième surface latérale (8.2) du disque d'isolateur (2), de manière à former une structure de nervures (7),
les nervures (7) sont agencées dans une direction radiale par rapport à l'axe central (a) de telle sorte que les nervures (7) ont une section transversale de type ondulé s'étendant dans la direction radiale, et
la section transversale est définie par l'intersection d'un plan parallèle à l'axe central (a) de l'isolateur (1) et passant entre le bourrelet intérieur et extérieur (5, 6) avec l'isolateur (1).

2. Isolateur (1) selon la revendication 1, dans lequel le disque d'isolateur (2) est directement moulé par injection sur une surface extérieure du conducteur (3) .

3. Isolateur (1) selon l'une des revendications précédentes, dans lequel une couche intermédiaire formée par un apprêt est agencée entre le conducteur (3) et le disque d'isolateur (2).

4. Isolateur (1) selon l'une des revendications précédentes, dans lequel le conducteur comprend des dents (26) qui sont directement ou indirectement engagées avec le disque d'isolateur (2).

5. Isolateur (1) selon l'une des revendications précédentes, dans lequel le premier matériau est injecté par au moins un premier canal de distribution (10.1) agencé au sein du conducteur (3).

6. Isolateur (1) selon l'une des revendications précédentes, dans lequel le bourrelet intérieur (5) et le bourrelet extérieur (6) sont supportés par la pluralité de nervures (7), les nervures (7) interconnectant le bourrelet intérieur (5) et le bourrelet extérieur (6).

7. Isolateur (1) selon l'une des revendications précédentes, dans lequel le premier matériau comprend au moins un matériau sélectionné dans le groupe des matériaux suivants : PET, PBT, PA, PES, PEI, PPS, PEEK, PPA, PP, POM, PF, résine de phénol formaldéhyde, UP, polyester insaturé, PUR.

8. Isolateur (1) selon l'une des revendications précédentes, dans lequel le premier matériau comprend au moins un matériau de remplissage sélectionné dans le groupe des matériaux de remplissage suivants :
polyamide, polyimide, polyester, alcool polyvinylique, polychlorure de vinylidène, polyacrylonitrile, polyuréthane, paraoxybenzoate de polyalkylène, type de phénol, laine, soie, coton, rayonne, acétate de cellulose, lin, ramie, jute, fibres d'aramide, verre, sépiolite, titanate de potassium, céramique, alumine, silicate de calcium, laine de roche.

9. Appareillage de commutation moyenne tension ou haute tension comprenant au moins un isolateur (1) selon l'une quelconque des revendications précédentes.

10. Procédé de production d'un isolateur (1) selon l'une des revendications 1 à 8, ledit procédé comprenant les étapes suivantes :
a. la fourniture d'un moule pour le moulage par injection du disque d'isolateur (2) de l'isolateur (1) ;
b. l'agencement d'un conducteur (3) dans une cavité du moule ;
c. l'injection d'un premier matériau dans le moule afin de former le disque d'isolateur (2), de telle sorte que le conducteur (3) est positionné à l'intérieur de l'ouverture centrale (4) et le bourrelet intérieur (5) du disque d'isolateur (2) et le conducteur (3) sont fermement interconnectés directement ou indirectement ;
d. le retrait du disque d'isolateur (2) et du conducteur (3) du moule.

11. Procédé selon la revendication 10, dans lequel le premier matériau est injecté via au moins un canal (10.1) agencé à l'intérieur du conducteur (3).

12. Procédé selon la revendication 10, dans lequel au moins une partie du moule est agencée de manière mobile afin de réduire le volume de la cavité et ainsi de compresser le matériau dans la cavité après et/ou pendant l'injection du matériau liquéfié.
